# EUROPEAN PATENT APPLICATION

(11) **EP 4 621 374 A1**
(43) Date of publication of application: **24.09.2025**
(21) Application number: 25164809.3
(22) Date of filing: 19.03.2025
(51) Int. Cl.: G01M 5/00, G01M 7/08, G01M 15/14, B64F 5/60

(54) **SYSTEM AND METHOD FOR ESTIMATING A SERVICE LIFE OF A COMPONENT OF AN AIRCRAFT POWER PLANT**

(30) Priority: 20.03.2024 US 202418610505
(71) Applicant: PRATT & WHITNEY CANADA CORP., Longueuil, Québec J4G 1A1 (CA)
(72) Inventor: BYERS, William, Longueuil, J4G 1A1 (CA); BOYD, Peter, Longueuil, J4G 1A1 (CA); CRAIG, David Muir, Longueuil, J4G 1A1 (CA); FANG, Jing, Longueuil, J4G 1A1 (CA)
(74) Representative: Dehns

(57) **Abstract**

Methods and systems for estimating a remaining service life of a component of an aircraft power plant are provided. A method (1000) includes inducing (1002) a vibration in the component, and measuring (1004) a response to the induced vibration in the component. A computer-implemented trained model is used (1006) to determine an estimated remaining service life for the component based on the measured response. An output indicative of the estimated remaining service life of the component is generated (1008).

## Description

### TECHNICAL FIELD

The disclosure relates generally to aircraft power plants, and more particularly to estimating a service life of a component of an aircraft power plant using non-destructive testing.

### BACKGROUND

Some components of aircraft power plants are subjected to cyclic loading during use. Internal defects such as cracks and/or voids in a component can affect the service life of the component. Existing non-destructive testing methods can provide insight on the structural integrity of a component but do not elaborate of on the future performance of the component. Improvement is desirable.

### SUMMARY

In one aspect, the disclosure describes a method of estimating a remaining service life of a component of an aircraft power plant. The method comprises:
while the component is unused in an operation of the aircraft power plant:
inducing an induced vibration in the component; and
acquiring a measured response to the induced vibration in the component;
using a computer-implemented trained model, determining an estimated remaining service life for the component based on the measured response, the computer-implemented trained model having been trained using machine learning and historical data associating previous responses to induced vibrations with previous remaining service lives; and
generating an output indicative of the estimated remaining service life of the component.

Determining the estimated remaining service life for the component may include: identifying an internal defect present in the component based on the measured response; and relating the internal defect to the estimated remaining service life.

The component may be a metallic component made by additive manufacturing.

The component may be made from a fiber-reinforced composite material. The internal defect may include a delamination.

Determining the estimated remaining service life for the component may include: identifying a characteristic in the measured response; and determining the estimated remaining service life for the component based on the characteristic.

The characteristic may include a resonant frequency.

The characteristic may include a mode shape.

The characteristic may include a damping coefficient.

The characteristic may include a Q factor.

The induced vibration may be different from an expected in-use condition experienced by the component during the operation of the aircraft power plant.

Inducing the induced vibration and acquiring the measured response may be performed before an initial use of the component in the operation of the aircraft power plant.

Inducing the induced vibration and acquiring the measured response may be performed after the component has been used in the operation of the aircraft power plant.

Inducing the induced vibration may include striking the component.

Embodiments may include combinations of any or all of the above features.

In another aspect, the disclosure describes a computer program product for estimating a remaining service life of a component of an aircraft power plant, the computer program product comprising a non-transitory computer readable storage medium having program code embodied therewith, the program code readable/executable by a computer, processor or logic circuit to perform a method as described herein.

Embodiments may include combinations of any or all of the above features.

In another aspect, the disclosure describes a method of manufacturing an aircraft power plant. The method comprises:
manufacturing a component of the aircraft power plant;
while the component is uninstalled from the aircraft power plant:
   inducing a vibration in the component; and
   acquiring a response to the vibration induced in the component;
   using a computer-implemented trained model, relating a characteristic of the response to a health condition of the component; and
   when the health condition of the component is indicative of the component being suitable for service, installing the component in the aircraft power plant.

The method may include training the computer-implemented trained model using machine learning and historical data relating a previous characteristic to a previous health condition.

Relating a characteristic in the response to the health condition of the component may include: identifying an internal defect present in the component based on the characteristic; and relating the internal defect to the health condition.

Embodiments may include combinations of any or all of the above features.

In a further aspect, the disclosure describes a system for estimating a remaining service life of a component of an aircraft power plant. The system comprises:
an inducer operable to cause an induced vibration in the component;
a sensor operable to acquire a response to the induced vibration in the component;
one or more data processors; and
non-transitory machine-readable memory storing:
   a trained model trained using machine learning and historical data associating previous responses to induced vibrations with previous remaining service lives for the component; and
   instructions executable by the one or more data processors and configured to cause the one or more data processors to:
      using the trained model, assign an estimated remaining service life to the component based on the acquired response; and
      generate an output indicative of the estimated remaining service life of the component.

The inducer may be a hammer operable to strike the component.

The inducer may be a transducer operable to induce a sound wave into the component.

Embodiments may include combinations of any or all the above features.

Further details of these and other aspects of the subject matter of this application will be apparent from the detailed description included below and the drawings, which are provided by way of example only and are not intended to be limiting.

### DESCRIPTION OF THE DRAWINGS

Reference is now made to the accompanying drawings, in which:
FIG. 1 shows a schematic axial cross-section view of a turbofan gas turbine engine as an exemplary aircraft power plant of the prior art;
FIG. 2 is a schematic illustration of an exemplary system for estimating a remaining service life and/or a health condition of a component of the aircraft power plant;
FIG. 3 is a schematic illustration of another exemplary system for estimating the remaining service life and/or the health condition of the component of the aircraft power plant;
FIG. 4 is a schematic illustration of an exemplary computer of the system of FIG. 3 and/or the system of FIG. 4;
FIG. 5 is a flow diagram of an exemplary method of estimating a remaining service life of the component;
FIG. 6 is a flow diagram of an exemplary method of manufacturing the aircraft power plant;
FIG. 7 shows a table containing exemplary historical data used to train a computer-implemented trained model using machine learning;
FIG. 8 is a plot of an exemplary response to an induced vibration in the component in a time domain;
FIG. 9 is a plot of another exemplary response to the induced vibration in the component in a frequency domain;
FIG. 10 is a flow diagram of an exemplary method of health monitoring and/or life estimation of the component; and
FIG. 11 is a flow diagram of an exemplary method of training a machine learning model for estimating the remaining service life and/or health condition of the component.

### DETAILED DESCRIPTION

The present disclosure describes systems and methods for estimating a remaining service life of a component of an aircraft power plant. In some embodiments, the methods and systems described herein may acquire a response to an induced vibration (e.g., mechanical excitation) in the component and estimate the remaining service life based on the response. In some embodiments, the remaining life may be estimated using a computer-implemented model that is trained using machine learning and historical data associating previous responses to induced vibrations with previous remaining service lives relevant to the component. In some embodiments, the methods and systems described herein may facilitate a non-destructive testing (NDT) method that also elaborates on a future performance of the component. The methods and systems described herein may be used on newly-manufactured components, newly-refurbished components and/or on in-service components to determine whether the component is suitable for service in the aircraft power plant. In some embodiments, the methods and systems described herein may improve the reliability of NDT, health monitoring and component life estimations.

Aspects of various embodiments are described through reference to the drawings.

The term "connected" or "coupled to" may include both direct connection or coupling and indirect connection or coupling. The term "substantially" as used herein may be applied to modify any quantitative representation which could permissibly vary without resulting in a change in the basic function to which it is related. As used herein, the singular forms "a," "an," and "the" are intended to include the plural forms as well, unless the context clearly indicates otherwise.

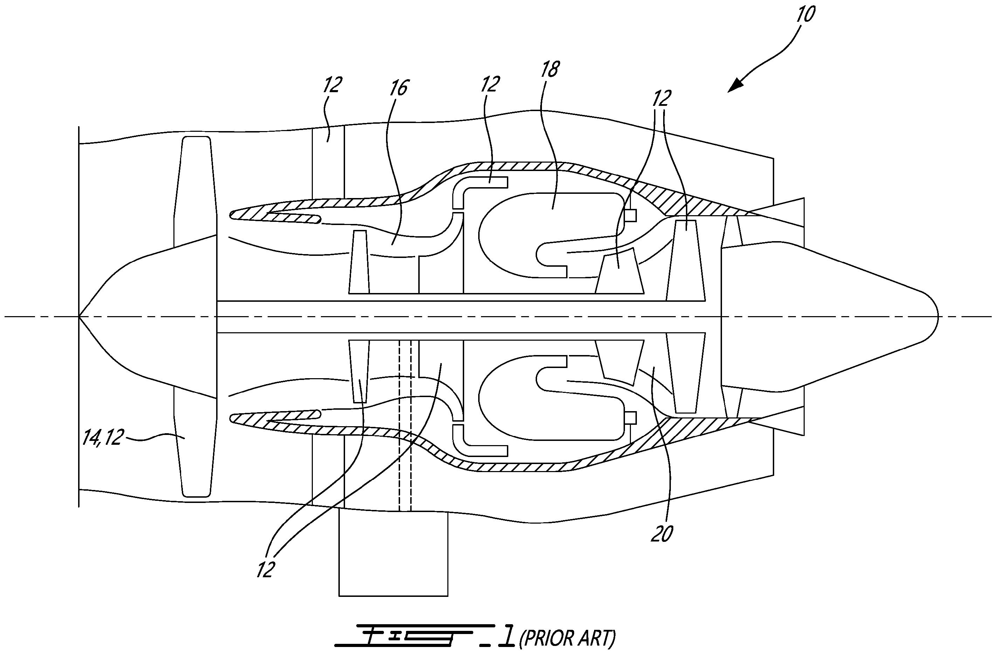

FIG. 1 illustrates an exemplary aircraft power plant 10 in the form of a turbofan gas turbine engine of a type preferably provided for use in subsonic flight. In various embodiments, power plant 10 may be configured to propel an aircraft to which power plant 10 is mounted, or power plant 10 may be an auxiliary power unit (APU) configured to perform non-propulsion functions onboard the aircraft. In some embodiments, power plant 10 may be or include a thermal engine such as gas turbine engine, a piston engine or a rotary (e.g., Wankel) engine. In some embodiments, power plant 10 may be a purely electric power plant. In some embodiments, power plant 10 may be a hybrid power plant including a thermal engine and an electric motor that cooperatively propel the aircraft. Power plant 10 may include one or more components 12 (referred hereinafter in the singular) that may be used with the methods and systems describe herein in order to estimate the remaining service life and/or health condition of component 12.

Power plant 10 as illustrated in FIG. 1 may generally include, in serial flow communication, fan 14 through which ambient air is propelled, multistage compressor 16 for pressurizing the air, combustor 18 in which the compressed air is mixed with fuel and ignited for generating an annular stream of hot combustion gases, and turbine section 20 for extracting energy from the combustion gases. In various embodiments, component 12 may include a rotor blade or a stator vane that is intended to be part of compressor 16, a rotor blade or a stator vane that is intended to be part of turbine section 20, a blade of fan 14, a bladed disc, or another relatively rigid component such as a duct (e.g., tube), a casing, a structural brace such as a strut for example. In some embodiments, component 12 may be a single/sole part having a unitary (i.e., monolithic) construction. In some embodiments, component 12 may be an assembly of two or more parts such as a bladed rotor including a hub and one or more blades mounted to the hub.

In various embodiments, component 12 may be made from a metallic material and/or from a fiber-reinforced composite material including (e.g., carbon) fibers that are embedded in a polymeric matrix for example. Component 12 may be manufactured using one or more known or other manufacturing processes. In various embodiments, component 12 may be manufactured using one or more processes such as additive manufacturing (e.g., layer-by-layer 3D printing), (e.g., sand) casting, (e.g., metal) injection moulding, forging, stamping, and/or subtractive manufacturing (e.g., machining, grinding, drilling) for example. In some embodiments, component 12 may be a metallic component made by additive manufacturing.

In some situations, component 12 may include one or more (e.g., internal or external) defects that may affect the service life of component 12. Such defect(s) may be generated during manufacturing and/or during service. The influence of the defect(s) on the service life of component 12 may depend on the type and location of the defect, and may also depend on the function of component 12 and the type of loading that is applied to component 12 during the operation of power plant 10. For example, when component 12 is subjected to cyclic loading (e.g., low-cycle fatigue or high-cycle fatigue), the presence of internal and/or surface defect(s) may increase the risk of fatigue crack initiation and/or crack propagation within component 12 and affect the service life of component 12.

Internal defects may include casting defects such as microshrinkage, which can be difficult to detect with existing NDT methods using x-rays due to the alignment of voids, grain diffraction, and other factors. In some situations, additively manufactured components may exhibit internal defects due to structural complexities, material variability and potentially other factors. Another example of a defect in component 12 made from fiber-reinforced composite material is delamination.

Some existing NDT methods may offer observations on the structural integrity of component 12 but do not elaborate on the future performance or service life of component 12. The methods and systems described herein may facilitate the determination of a remaining service life and/or health condition of component 12 using a computer-implemented (e.g., artificial intelligence) model trained using historical data and machine learning for example.

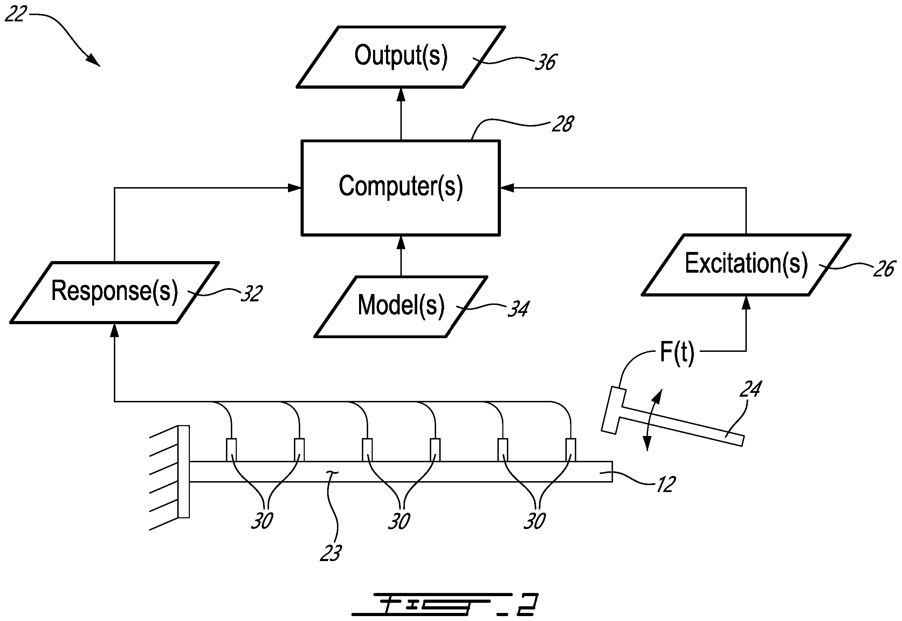

FIG. 2 is a schematic illustration of an exemplary system 22 for determining a health condition of component 12 and/or estimating a remaining service life of component 12. System 22 may be operable to conduct vibration testing on component 12. System 22 may be operable to detect one or more internal defects 23 in component 12. System 22 may include inducer 24 operable to induce a vibration in (e.g., mechanically excite) component 12. Testing of component 12 may be conducted while component 12 is not currently being used in power plant 10. For example, testing may be conducted while component 12 is uninstalled from power plant 10 and held in a fixture outside of power plant 10 for example. Alternatively, testing may be conducted while component 12 is installed in power plant 10 and power plant 10 is not in operation. In various embodiments, the vibration induced into component 12 may not be representative of an expected in-use operating condition of component 12. In other words, the induced vibration (e.g., excitation 26) may be different from an expected in-use condition experienced by component 12 during the operation of power plant 10. For example, testing of component 12 may be intended to evaluate one or more acoustic properties of component 12, one or more resonant properties (e.g., frequency) of component 12 and/or to evaluate the ability of component 12 to transmit the induced vibration across at least a portion of component 12.

In some embodiments, inducer 24 may include a (e.g., instrumented) hammer or stinger operable to strike (e.g., tap, contact, impact) component 12, or other means for inducing the vibration into component 12. Striking of component 12 may provide an impulsive input into component 12 and be performed in a manner that does not damage component 12 during the test. Accordingly, system 22 may be used to conduct NDT on component 12. Inducer 24 may be operable in a controlled manner to induce a vibration represented as one or more excitations 26 (referred hereinafter in the singular) into component 12. In some embodiments, inducer 24 may include an actuator operatively connected to and optionally controlled by computer 28. In some embodiments, excitation 26 may have a magnitude that varies as a function of time. In some embodiments, excitation 26 may be predetermined and inducer 24 may be commanded to induce the prescribed excitation 26. In some embodiments, inducer 24 may be instrumented and excitation 26 may be measured. In some embodiments, excitation 26 may be known and optionally be used by computer 28 in the methods described herein.

System 22 may include one or more sensors 30 to acquire (e.g., record) one or more responses 32 (referred hereinafter in the singular) to the induced vibration in component 12. In some embodiments, system 22 may include a network of sensors 30. Sensor(s) 30 may be operatively coupled to component 12. For example, sensor(s) 30 may include one or more strain gauges, one or more accelerometers, and/or one or more microphones in various embodiments. In some embodiments, sensor(s) 30 such as strain gauges and accelerometers may be installed to be in contact with component 12. Alternatively, in some embodiments, sensor(s) 30 such as microphones for acquiring an acoustic response from component 12 may be installed at a distance from (i.e., not in contact with) component 12 while still being acoustically coupled to component 12.

In some embodiments, a plurality of sensors 30 may be used so that individual sensors 30 may be installed at different locations on component 12. Individual responses 32 may be acquired from respective sensors 30 and separately analyzed to detect a presence of defect 23 and optionally also estimate a location of defect 23 within component 12 depending on which of the responses 32 is indicative of such defect 23. In some embodiments, individual responses 32 may be acquired but consolidated together and evaluated as a whole. Alternatively, a single response 32 may be acquired and/or evaluated. The number of sensors 30 and responses 32 used in the methods described here may be selected based on the shape and/or configuration of component 12, on the material of component 12 and/or on the type of defect(s) 23 that is/are of interest for example.

System 22 may include computer 28 which may be in data communication with sensor(s) 30 and optionally also with inducer 24. Computer 28 may be configured to receive one or more signals indicative of response 32 and optionally also use or receive one or more signals indicative of excitation 26 that is used to induce the vibration into component 12. Using response 32, model 34 and optionally excitation 26, computer 28 may be operable to generate one or more output(s) 36 (referred hereinafter in the singular). Output 36 may be representative of a health condition of component 12 and/or a remaining service life of component 12.

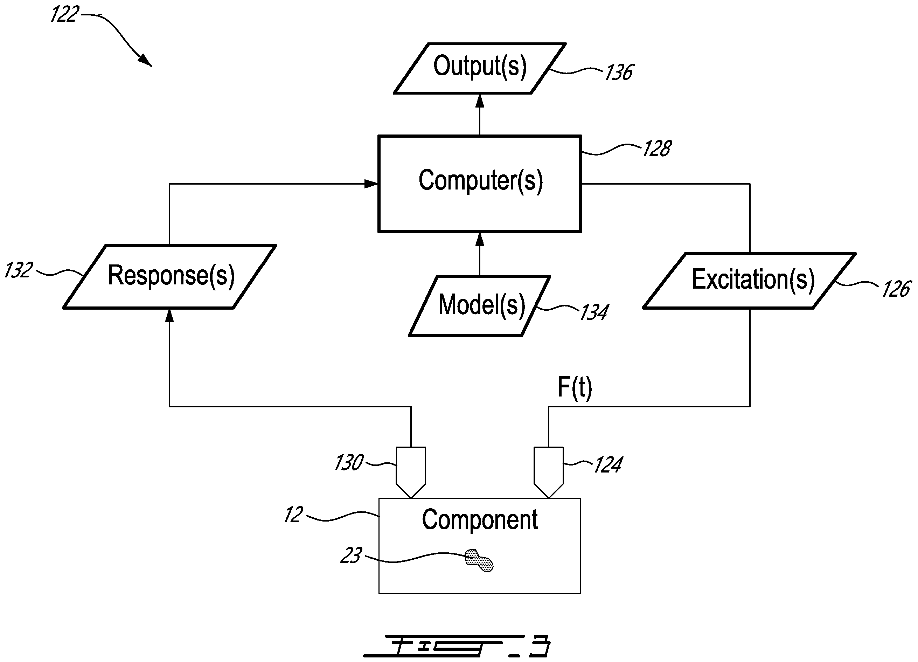

FIG. 3 is a schematic illustration of another exemplary system 122 for determining a health condition of component 12 and/or estimating a remaining service life of component 12. System 122 may include elements of system 22 and like elements are identified using reference numerals incremented by 100. System 122 may be operable to conduct vibration testing on component 12. System 122 may be operable to detect one or more internal defects 23 in component 12. System 122 may include inducer 124 operable to induce a vibration in component 12. Testing of component 12 may be conducted while component 12 is not currently being used in power plant 10. For example, testing may be conducted while component 12 is uninstalled from power plant 10 and held in a fixture outside of power plant 10 for example. Alternatively, testing may be conducted while component 12 is installed in power plant 10 and power plant 10 is not in operation. In various embodiments, the vibration induced into component 12 may not be representative of an expected in-use operating condition of component 12. In other words, the induced vibration (e.g., excitation 126) may be different from an expected in-use condition experienced by component 12 during the operation of power plant 10. For example, testing of component 12 may be intended to evaluate one or more acoustic properties of component 12, resonant properties of component 12 and/or to evaluate the ability of component 12 to transmit the induced vibration across at least a portion of component 12.

In some embodiments, inducer 124 may include an ultrasonic probe (e.g., generator or transducer) operable to generate ultrasound energy and transmit the ultrasound energy to component 12. For example, inducer 124 may be coupled to (e.g., in contact with) component 12 to induce one or more sound waves into component 12. Accordingly, system 122 may be used to conduct NDT on component 12. Inducer 124 may be operable in a controlled manner to induce a vibration represented as one or more excitations 126 (referred hereinafter in the singular) into component 12. In some embodiments, inducer 124 may include an actuator operatively connected to and optionally controlled by computer 128. For example, inducer 124 may be operable to convert electrical signals to ultrasound. In some embodiments, excitation 126 may have a magnitude that varies as a function of time. In some embodiments, excitation 126 may be predetermined and inducer 124 may be commanded to induce the prescribed excitation 126. In some embodiments, excitation 126 may be measured. In some embodiments, excitation 26 may be known and optionally be used by computer 28 in the methods described herein.

System 122 may include one or more sensors 130 to acquire one or more responses 132 (referred hereinafter in the singular) to the induced vibration in component 12. Sensor(s) 130 may be coupled to component 12. For example, sensor(s) 130 may include one or more ultrasonic sensors operable to convert ultrasound into an electrical signal.

In some embodiments, a plurality of sensors 130 may be used so that individual sensors 130 may be installed at different locations on component 12. Individual responses 132 may be acquired from respective sensors 130 and separately analyzed to detect a presence of defect 23 and optionally also estimate a location of defect 23 depending on which of the responses 132 is indicative of such defect 23. In some embodiments, individual responses 132 may be acquired but consolidated together and evaluated as a whole. Alternatively, a single response 132 may be acquired and/or evaluated. The number of sensors 130 and responses 132 used in the methods described here may be selected based on the shape and/or configuration of component 12, on the material of component 12 and/or on the type of defect(s) 23 that is/are of interest for example.

System 122 may include computer 128 which may be in data communication with sensor(s) 130 and optionally also with inducer 124. Computer 128 may be configure to receive one or more signals indicative of response 132 and optionally also use or receive one or more signals indicative of excitation 126 that is used to induce the vibration into component 12. Using response 132, model 134 and optionally excitation 126, computer 128 may be operable to generate one or more output(s) 136 (referred hereinafter in the singular). Output 136 may be representative of a health condition of component 12 and/or a remaining service life of component 12.

In various embodiments of systems 22, 122, excitation 26, 126 may be delivered to component 12 using contact or non-contact methods. For example, excitation 26, 126 may be delivered to component 12 using inducer 24. Systems 22, 122 may be operable to conduct acoustic, resonant, or harmonic testing in the time domain and/or in the frequency domain.

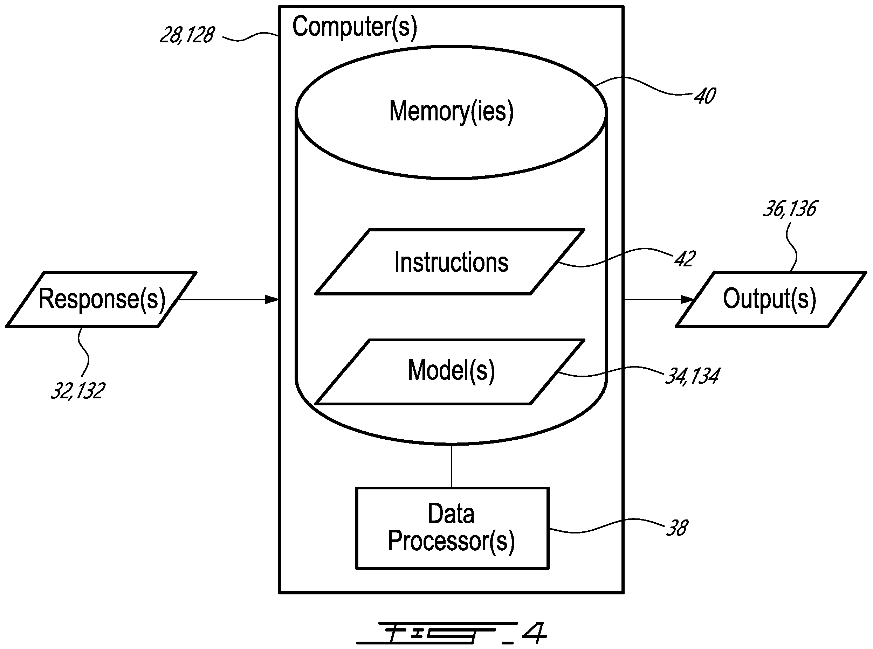

FIG. 4 is a schematic illustration of computer 28, 128 of system 22, 122. Computer 28, 128 may include one or more data processors 38 (referred hereinafter in the singular as "processor 38") and non-transitory machine-readable memory(ies) 40 (referred hereinafter in the singular). Computer 28, 128 may be configured to generate output 36, 136 based on response 32, 132 received and optionally also perform other tasks. Computer 28, 128 may perform one or more procedures or steps defined by instructions 42 (e.g., software, program code) stored in memory 40 and executable by processor(s) 38 to generate output 36, 136. Output 36, 136 may be indicative of a health condition and/or an estimated remaining service life of component 12 and may be provided to maintenance personnel via a display device for example.

Processor(s) 38 may include any suitable device(s) configured to cause a series of steps to be performed by computer 28, 128 so as to implement a computer-implemented process such that instructions 42, when executed by computer 28, 128 or other programmable apparatus, may cause the functions/acts specified in the methods described herein to be executed. Processor(s) 38 may include, for example, any type of general-purpose microprocessor or microcontroller, a digital signal processing (DSP) processor, an integrated circuit, a field programmable gate array (FPGA), a reconfigurable processor, other suitably programmed or programmable logic circuits, or any combination thereof.

Memory 40 may include any suitable machine-readable storage medium. Memory 40 may include non-transitory controller readable storage medium such as, for example, but not limited to, an electronic, magnetic, optical, electromagnetic, infrared, or semiconductor system, apparatus, or device, or any suitable combination of the foregoing. Memory 40 may include any storage means (e.g., devices) suitable for retrievably storing machine-readable instructions 42 executable by processor(s) 38. In some embodiments, model 34, 134 may also be stored in memory 40.

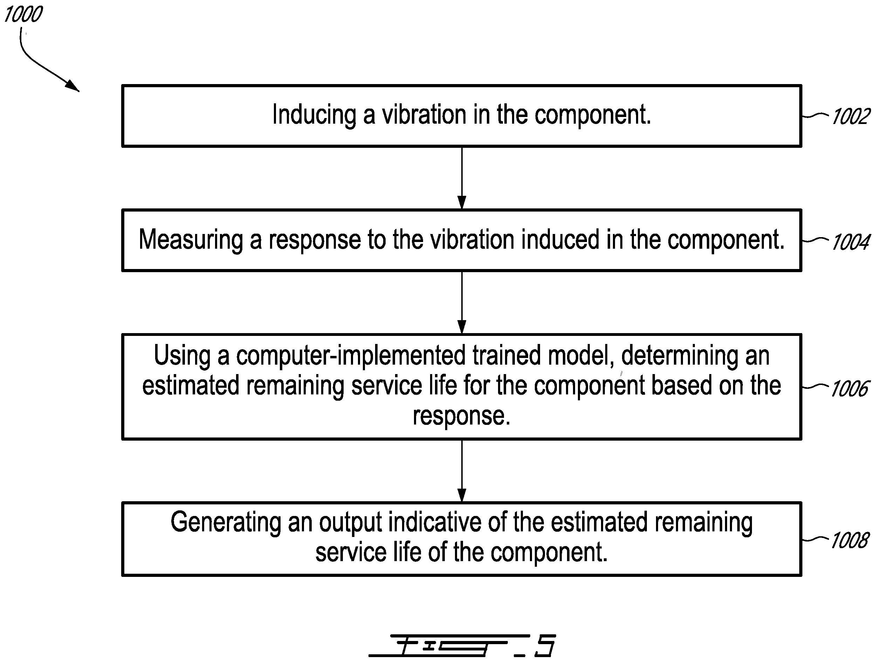

FIG. 5 is a flow diagram of an exemplary method 1000 of estimating (i.e., predicting) a remaining service life of component 12 of power plant 10. Method 1000 may be performed using system 22, 122 or another system. For example, machine-readable instructions 42 may be configured to cause computer 28, 128 to perform at least part of method 1000. Method 1000 may include elements of other methods described herein. Method 1000 may include elements of system 22, 122. In various embodiments, method 1000 may include:
while component 12 is unused in an operation of power plant 10: inducing an induced vibration (e.g., excitation 26, 126) in component 12 (block 1002); and measuring response 32, 132 to the vibration induced in component 12 (block 1004);
using model 34, 134, determining an estimated remaining service life for component 12 based on response 32, 132 (block 1006); and
generating output 36, 136 indicative of the estimated remaining service life of component 12 (block 1008).

In some embodiments, the use of model 34, 134, may improve reliability in service life prediction derived using NDT. In some situations, component 12 may include one or more (e.g., internal or external) defects 23 that may affect the service life of component 12. In some embodiments, method 1000 may include identifying one or more (e.g., internal) defects 23 present in component 12 based on response 32, 132, and then relating defect 23 to the estimated remaining service life. In various situations defect(s) 23 may include one or more cracks, one or more voids (e.g., porosity) and/or delamination(s) depending on the type of material and on the manufacturing process(es) used to fabricate component 12.

Defect 23 may be generated during manufacturing and/or during service of component 12. In some embodiments, the actions of inducing the vibration and measuring the response, or the entirety of method 1000 may be performed before an initial use of component 12 in the operation of power plant 10. For example, method 1000 may be performed to estimate the service life of component 12 immediately after manufacturing of component 12 and/or detect one or more defects 23 introduced into component 12 during manufacturing. The information on the estimated remaining service life and/or defect 23 may then be used to make changes to the manufacturing process to potentially improve the service life of future components.

Alternatively or in addition, the actions of inducing the vibration and measuring the response, or the entirety of method 1000 may be performed after component 12 has been used in the operation of power plant 10. For example, method 1000 may be performed to estimate the service life of component 12 during a maintenance procedure (e.g., overhaul) and/or detect one or more defects 23 either introduced into component 12 during service, or that has been exacerbated during service. The information on the estimated remaining service life and/or defect 23 may then be used to evaluate the service conditions of component 12 and/or adjust a nominal service life of component 12 if necessary.

Further aspects of method 1000 are described below in relation to the subsequent figures.

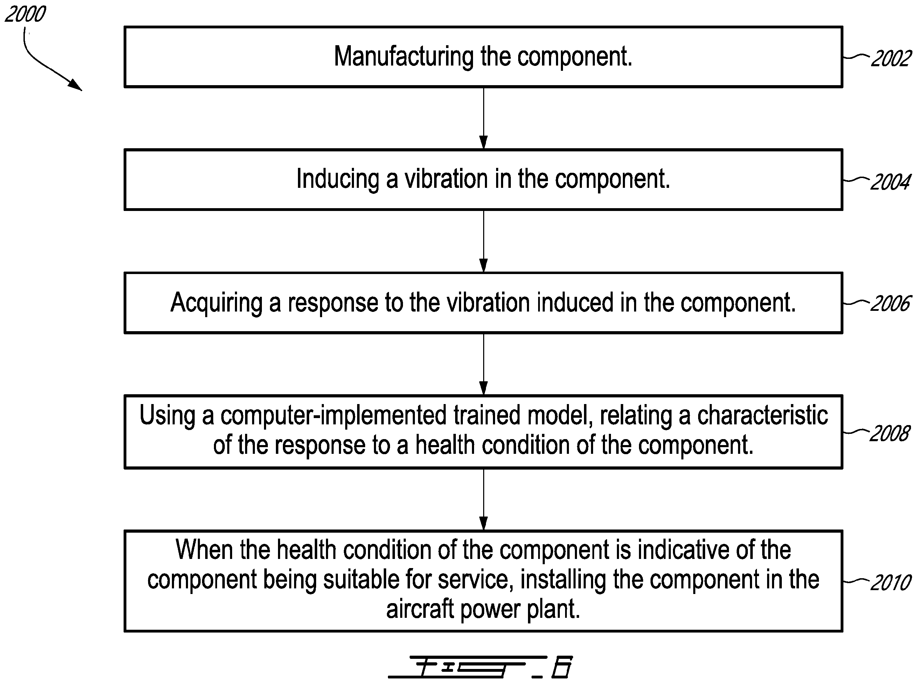

FIG. 6 is a flow diagram of an exemplary method 2000 of manufacturing power plant 10. Method 2000 may be performed using system 22, 122 or another system. For example, machine-readable instructions 42 may be configured to cause computer 28, 128 to perform at least part of method 2000. Method 2000 may include elements of system 22, 122. Method 2000 may include elements of other methods described herein. For example, aspects of method 1000 may be combined with aspects of method 2000. In various embodiments, method 2000 may include:
manufacturing component 12 of power plant 10 (block 2002);
while component 12 is uninstalled from power plant 10: inducing a vibration (e.g., excitation 26, 126) in component 12 (block 2004); and acquiring response 32, 132 to the vibration induced in component 12 (block 2006);
using a computer-implemented model 34, 134, relating a characteristic of response 32, 132 to a health condition of component 12 (block 2008); and
when the health condition of component 12 is indicative of component 12 being suitable for service, installing component 12 in power plant 10 (block 2010).

The health condition may be indicative of whether the service life of component 12 is determined to be significantly reduced based on response 32, 132. For example, if the service life is determined not to be significantly reduced based on response 32, 132, the health condition may be determined to be "acceptable" so that component 12 may be installed into power plant 10 and used during operation of power plant 10. In situations where the service life of component 12 is determined to be unsuitable for service but may be improved by way of repair, the health condition may be set to "needs rework" to indicate that component 12 may be repaired to improve its service life. In some situations, repairing component 12 may include replacing a portion of component 12 containing defect 23 with new material.

In situations where the service life of component 12 is determined to be unsuitable for service and the characteristic indicates that defect 23 is beyond repair, the health condition may be set to "rejected" so that component 12 may not be installed in power plant 10. When health condition is set to "rejected", component 12 may be discarded or recycled.

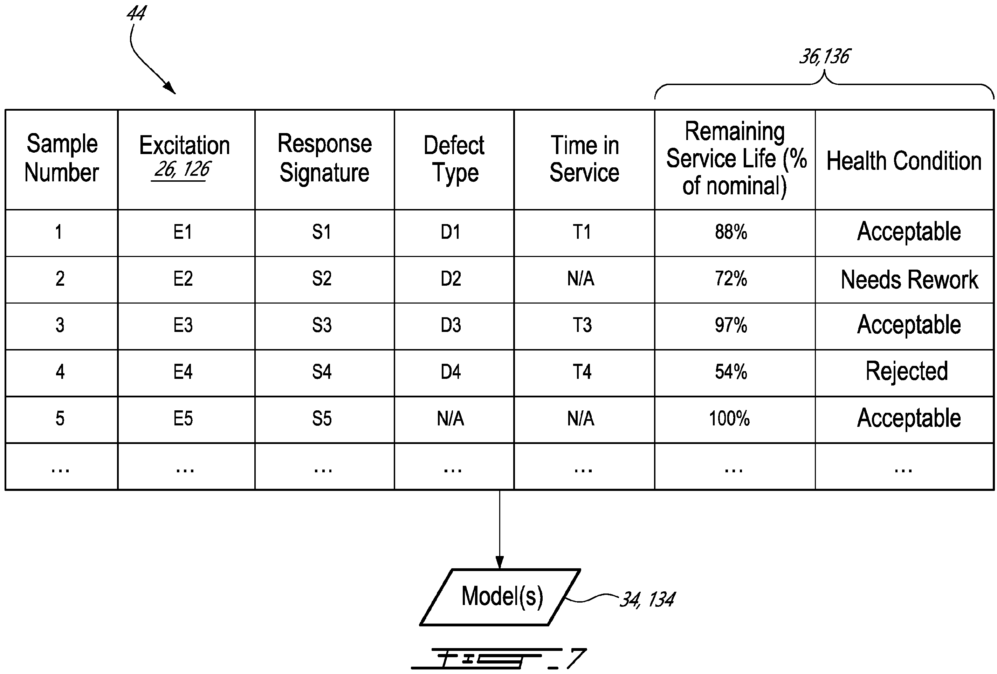

The characteristic may be compared to one or more predefined signatures, thresholds and/or ranges to determine the appropriate health condition. Such signatures, thresholds and/or ranges may be predetermined and stored in memory 40. In some embodiments, such signatures, thresholds and/or ranges may be stored in model 34, 134 and determined from historical data 44 (shown in FIG. 7) that has been used to train model 34, 134.

FIG. 7 shows a table containing exemplary labeled historical data 44 used to train one or more computer-implemented digital models 34, 134 (referred hereinafter in the singular) using machine learning. Model 34, 134 may be a suitable artificial intelligence model. For example, model 34, 134, may be a machine learning model including a computer program that can recognize one or more patterns and/or make decisions from a previously unseen dataset such as sensed response 32, 132. Model 34, 134 may include model data such as historical data 44 and a prediction algorithm.

In some embodiments, model 34, 134 may include one or more classifiers having an algorithm that automatically orders or categorizes data into one or more of a set of classes. In some embodiments, model 34, 134 may be used to qualify and optionally quantify defects 23 based on previously exhibited characteristics (i.e., signatures) in previous responses to vibration testing. In other words, model 34, 134 may be used to assign a degree of severity to defect 23. For example, in some embodiments, model 34, 134 may relate a signature to one of a limited set of defect types such a small crack, a large crack, mild porosity, severe porosity, small delamination and large delamination.

In some embodiments, model 34, 134 may be configured to relate a signature or a defect type to one of a limited set of remaining service life ranges. The ranges of remaining service life may be quantified as a number of loading/unloading cycles, a number of flights/missions, a number of hours of operation of power plant 10, or as a fraction (e.g., percentage) of a nominal (e.g., baseline, average, expected) service life of component 12. For example, the nominal service life may be an expected service life of a version of component 12 that is devoid of defects that are outside an acceptable tolerance. In some embodiments, model 34, 134 may be configured to relate a signature or a defect type to one of a limited set of possible health conditions such as "acceptable", "needs rework" and "rejected" for example.

In various embodiments, relating a signature to a health condition may be done directly or in a stepwise manner. In other words, historical data 44 and model 34, 134, may include data obtained through autocorrelation and/or cross-correlation. For example, relating a signature to a health condition may include first identifying an internal defect present in component 12 based on the signature, and then relating the internal defect to the health condition. In some embodiments, relating a signature to a health condition may be done by first determining a remaining service life and then relating the remaining service life to the health condition.

In some embodiments, model 34, 134 may include a regression algorithm that automatically assigns a numerical value that is within a range. For example, in some embodiments, model 34, 134 may be configured to relate a signature or a defect type to a specific value of remaining service life. The specific value may be a number of loading/unloading cycles, a number of flights/missions, a number of hours of operation of power plant 10, or as a fraction (e.g., percentage) of a nominal (e.g., baseline, average, expected) service life of component 12.

In various embodiments, model 34, 134 may be generated using one or more neural networks, which may include a recurrent neural network, a long short-term memory network, a convolutional neural network, and/or combinations thereof. Model 34, 134 may be trained using supervised learning using historical data 44. Historical data 44 may include past inspection data acquired from other/previous components and which may include previous signatures that have been labeled with relevant parameters (e.g., defect types, remaining service lives and health conditions) and where such signatures are stored into a database. For illustration purpose, FIG. 7 shows exemplary historical data 44 for samples 1-5 but historical data 44 may include additional records associated with more samples. The number of records in historical data 44 may be selected based on the accuracy desired and the desired functionality of model 34, 134.

In some embodiments, model 34, 134 may be refined using active learning where new data sets/points are periodically added to historical data 44 and used to further train model 34, 134. In other words, new data sets/points may be added in a iterative manner so that model 34, 134 may be refined by way of the new data points/sets, and consequently become more accurate.

Historical data 44 may be stored in a database and used to train model 34, 134. Historical data 44 may contain signatures S1-S4 associated with a plurality of types of defects D1-D4. In some embodiments, samples 1-5 may all be for the same type of component. In some embodiments, some of samples 1-5 may be for different types of components (e.g., within a family of components) having compatible signatures S1-S5 that are relevant to component 12 as well and optionally other components of interest. Signatures S1-S5 may also be associated with respective excitations E1-E5.

In some embodiments, model 34, 134 may be trained to characterize newly manufactured components or newly-refurbished components that have not yet been exposed to service conditions in power plant 10. Alternatively or in addition, model 34, 134 may be trained to characterize components that have been exposed to service conditions in power plant 10. Relations between signatures and defect types may be established empirically by way of inspections/characterisations (e.g., metallurgical characterization, fracture analysis) of previous components. Relations between signatures or defect types and remaining service lives may also be established empirically by way of mechanical testing, or by way of cataloging in-service events (e.g., failures) or other field observations. Relations between signatures or defect types and health conditions may be established using predefined thresholds.

In reference to FIG. 7, samples 1, 3 and 4 in historical data 44 are components that have been in service in power plant 10 for times T1, T3 and T4 respectively and may contain respective defect types D1, D3 and D4. Based on their times in service and remaining service lives, samples 1 and 3 may be related to an "acceptable" health condition. In other words, the remaining service lives for samples 1 and 3 may each be within an expected range for their time in service. However, based on its time in service and remaining service life, sample 4 may be related to a "rejected" health condition. The rejection of sample 4 may be associated with premature wear of sample 4 during use.

Samples 2 and 5 in historical data 44 are components that have not yet been in service in power plant 10. Sample 2 may contain defect type D2 that corresponds to a remaining service life of 72%. Since sample 2 has not yet been in service, defect type D2 may be a manufacturing defect. In the present scenario, defect type D2 may render sample 2 unsuitable for service but may be repairable. Accordingly, sample 2 may be assigned a health condition of "needs rework". Signature S5 of sample 5 may indicate that sample 5 is devoid of defects outside of an acceptable tolerance and may therefore be assigned a remaining service life of 100% and a health condition of "acceptable".

In some embodiments, historical data 44 may includes records of the same previous components (i.e., samples) that are tested at different times during their service lives. Accordingly, model 34, 134 may be used to evaluate components that are newly manufactured or refurbished, and/or evaluate components different intervals of their service lives. In various embodiments, results obtained using model 34, 134 may be used to improve manufacturing processes, conduct health monitoring of in-service components, improve the reliability of service life estimations and/or conduct usage-based lifing of components.

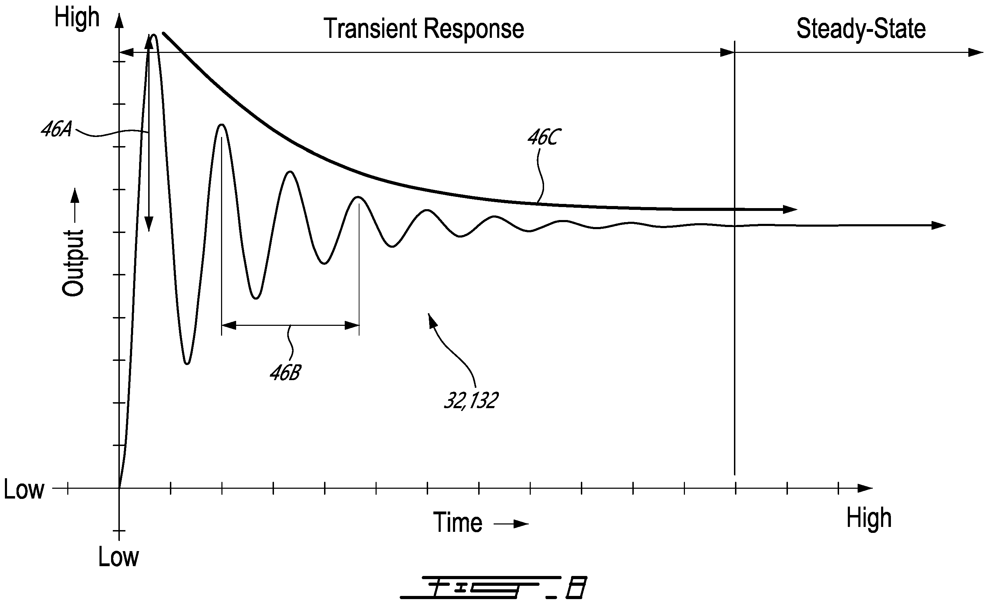

FIG. 8 is a plot of an exemplary measured response 32, 132 (i.e., inspection data) to an induced vibration in component 12. Model 34, 134 may process inspection data such frequency response functions, time domain data or frequency domain data from vibration testing and may compare one or more dynamic characteristics 46A-46G of response 32, 132 to signatures S1-S5 stored in a database. The spectrum of the signatures S1-S5 and measured response 32, 132 may include acoustic, harmonic, or resonant frequencies. One or more characteristics 46A-46G may be extracted from response 32, 132 and compared to signatures S1-S5 to determine the quantification and/or qualification of one or more defects 23 in component 12, determine the remaining service life of component 12 and/or determine whether component 12 is acceptable, needs reword or is rejected according to one or more prescribed thresholds.

Model 34, 134 may be trained to identify (e.g., filter out) one or more characteristics 46A-46G from response 32, 132. Different characteristics 46A-46G may be used for NDT of different components 12 and/or for identifying different types of defects 23. As shown in FIG. 8, characteristics 46A-46C may be exhibited in a time-domain representation of response 32, 132. For example, characteristic 46A may include a maximum amplitude of an oscillation in response 32, 132, characteristic 46B may include a frequency of an oscillation in response 32, 132, characteristic 46C may include a damping coefficient of an oscillation in response 32, 132.

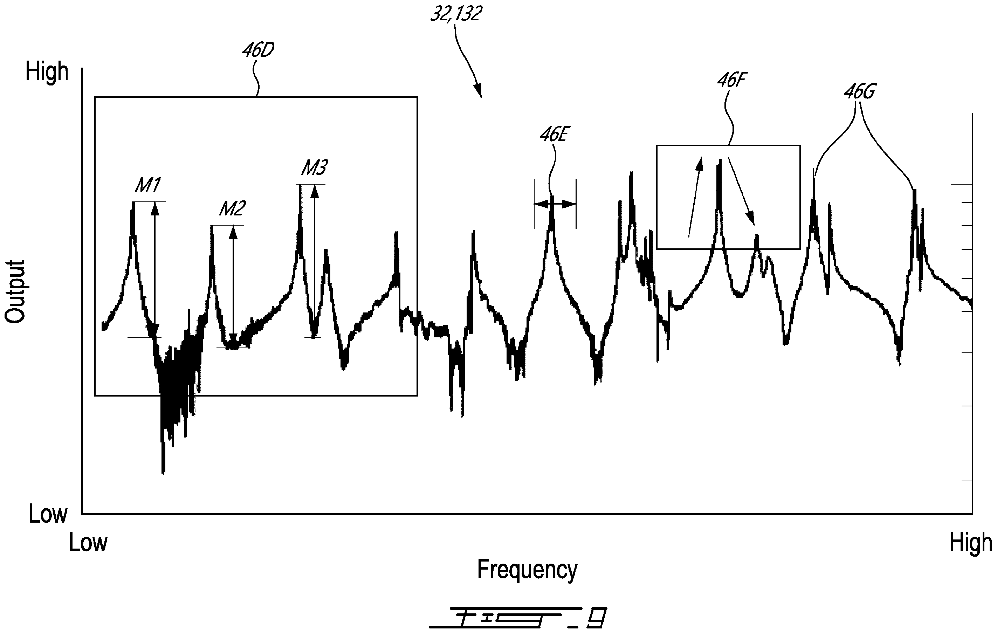

FIG. 9 is a plot of another exemplary measured response 32, 132 (i.e., inspection data) to an induced vibration in component 12. As shown in FIG. 9, characteristics 46D-46G may represent dynamic properties in a frequency-domain representation of response 32, 132 that may be used for modal analysis. For example, characteristic 46D may include a mode shape (amplitude and phase) in response 32, 132, characteristic 46E may include a width of a peak (damping coefficient) in response 32, 132, characteristic 46F may include a Q factor in response 32, 132. The mode shape may describe a deformation that component 12 would show when vibrating at the resonant frequency. The damping coefficient may describe the loss of energy in component 12 by dissipation when subjected to excitation 26, 126. The Q factor may define a ratio of a center frequency to its bandwidth when subjected to excitation 26, 126.

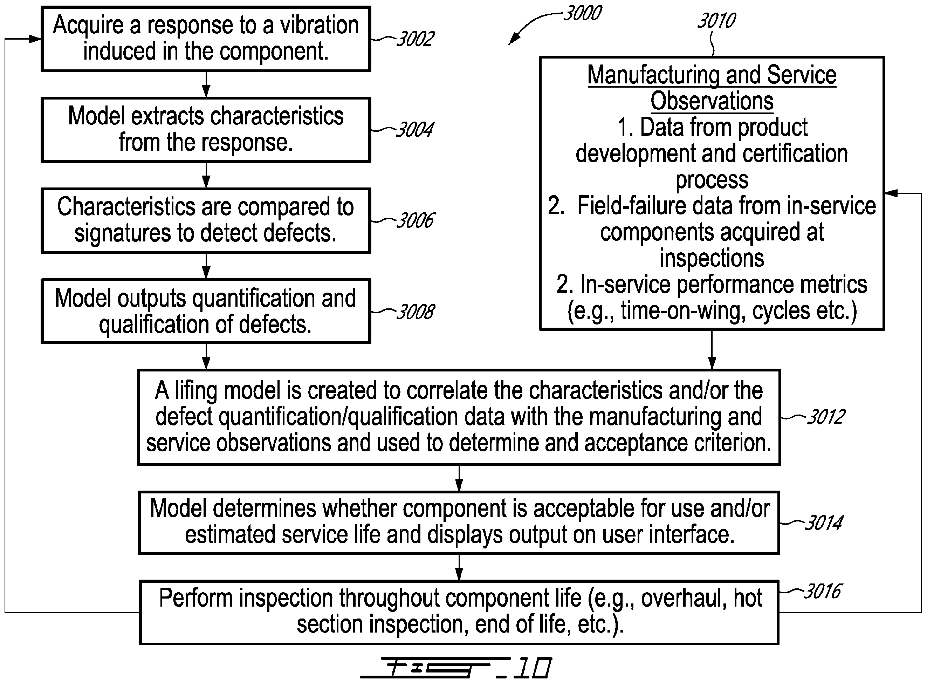

FIG. 10 is a flow diagram of an exemplary method 3000 of health monitoring and/or life estimation of component 12. Method 3000 may be performed using system 22, 122 or another system. For example, machine-readable instructions 42 may be configured to cause computer 28, 128 to perform at least part of method 3000. Method 3000 may include elements of other methods described herein. Method 3000 may include elements of system 22, 122.

At block 3002, method 3000 may include acquiring response 32, 132 (inspection data) to the vibration induced into component 12. At block 3004, one or more characteristics 46A-46G may be extracted (e.g., by model 34, 134) from response 32, 132. At block 3006, characteristic(s) 46A-46G may be compared to stored signatures S1-S5 to detect one or more defects 23 in component 12. At block 3008, model 34, 134 may output a quantification and/or qualification of the defect(s) 23. At block 3010, manufacturing and service observations may be obtained. The manufacturing and service observations may include service data from product development and certification process may be obtained, field failure data from in-service components acquired during a hot section inspection or during an overhaul may be obtained, and in-service performance metrics such as time-on-wing and number of cycles may be obtained. At block 3012, the data received from blocks 3008 and 3010 may be received and used to create a lifing model or use a lifing model which may be part of model 34, 134 to correlate the characteristics and/or the defect quantification/qualification data with the manufacturing and service observations to determine an acceptance criterion. The acceptance criterion may include one or more thresholds. At block 3014, model 34, 134 may determine whether component 12 is acceptable for service and outputs an estimated service life and/or health condition for display on a user interface. At block 3016, inspections may be performed throughout the life of component 12 to obtain service observations at block 3010. The inspections may be conducted at regular intervals and/or during an overhaul, during a hot section inspection, and/or at the end of life for example.

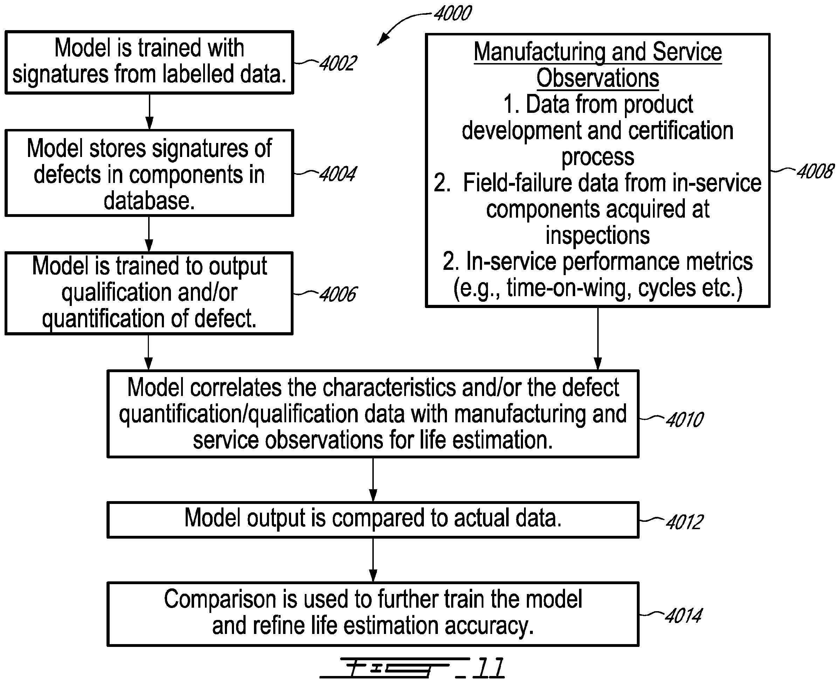

FIG. 11 is a flow diagram of an exemplary method 4000 of training model 34, 134 for estimating the remaining service life of component 12. Method 4000 may be performed using system 22, 122 or another system. For example, machine-readable instructions 42 may be configured to cause computer 28, 128 to perform at least part of method 4000. Method 4000 may include elements of other methods described herein. Method 4000 may include elements of system 22, 122.

At block 4002, method 4000 may include training model 34, 134 with relevant signatures S1-S5 from labelled historical data 44. At block 4004, model 34, 134 may store signatures S1-S5 of defects 23 in a database. At block 4006, model 34, 134 may be trained to output qualification and/or quantification of defects 23 using historical data 44. At block 4008, manufacturing and service observations may be obtained. The manufacturing and service observations may include service data from product development and certification process may be obtained, field failure data from in-service components acquired during a hot section inspection or during an overhaul may be obtained, and in-service performance metrics such as time-on-wing and number of cycles may be obtained. At block 4010, the data received from blocks 4006 and 4008 may be received and used to train model 34, 134 to correlate the signatures and/or the manufacturing and service observations to determine service life estimations. At block 4012 model 34, 134 may be validated by comparing an output from model 34, 134 to actual data. At block 4014, model 34, 134 may be refined using active learning where a comparison from block 4012 may be used as new data to further train model 34, 134 to improve the accuracy of model 34, 134.

Aspects of the present disclosure may be embodied as systems, devices, methods and/or computer program products for estimating a remaining service life of a component of an aircraft engine or for performing other methods described herein. For example, aspects of the present disclosure may take the form of a computer program product embodied in one or more non-transitory computer readable medium(ia) (e.g., memory 40) having computer readable program code (e.g., instructions 42 and model 34, 134) embodied thereon. The program code may be readable and executable by one or more computers (e.g., computer(s) 28, 128), processor(s) or logic circuit(s) to perform any one of methods 1000, 2000, 3000 and 4000.

The embodiments described in this document provide non-limiting examples of possible implementations of the present technology. Upon review of the present disclosure, a person of ordinary skill in the art will recognize that changes may be made to the embodiments described herein without departing from the scope of the invention as defined by the appended claims.

## Claims

1. A method (1000) of estimating a remaining service life of a component of an aircraft power plant (10), the method comprising:
while the component is unused in an operation of the aircraft power plant:
inducing (1002) an induced vibration in the component; and acquiring (1004) a measured response (32) to the induced vibration in the component;
using a computer-implemented trained model (34), determining (1006) an estimated remaining service life for the component based on the measured response, the computer-implemented trained model having been trained using machine learning and historical data (44) associating previous responses to induced vibrations with previous remaining service lives; and
generating (1008) an output indicative of the estimated remaining service life of the component.

2. The method as defined in claim 1, wherein determining the estimated remaining service life for the component includes:
identifying an internal defect (23) present in the component based on the measured response; and
relating the internal defect to the estimated remaining service life.

3. The method as defined in claim 1 or 2, wherein the component is a metallic component made by additive manufacturing.

4. The method as defined in claim 2, wherein the component is made from a fiber-reinforced composite material and the internal defect includes a delamination.

5. The method as defined in any preceding claim, wherein determining the estimated remaining service life for the component includes:
identifying a characteristic (46A-46G) in the measured response; and
determining the estimated remaining service life for the component based on the characteristic.

6. The method as defined in claim 5, wherein the characteristic includes a resonant frequency; and/or
wherein the characteristic includes a mode shape; and/or
wherein the characteristic includes a damping coefficient; and/or
wherein the characteristic includes a Q factor.

7. The method as defined in any preceding claim, wherein the induced vibration is different from an expected in-use condition experienced by the component during the operation of the aircraft power plant.

8. The method as defined in any preceding claim, wherein inducing the induced vibration and acquiring the measured response are performed before an initial use of the component in the operation of the aircraft power plant.

9. The method as defined in any of claims 1 to 7, wherein inducing the induced vibration and acquiring the measured response are performed after the component has been used in the operation of the aircraft power plant.

10. The method as defined in any preceding claim, wherein inducing the induced vibration includes striking the component.

11. A computer program product for estimating a remaining service life of a component (12) of an aircraft power plant (10), the computer program product comprising a non-transitory computer readable storage medium having program code embodied therewith, the program code readable/executable by a computer, processor or logic circuit to perform the method as defined in any preceding claim.

12. A method (2000) of manufacturing an aircraft power plant (10), the method comprising:
manufacturing (2002) a component (12) of the aircraft power plant;
while the component is uninstalled from the aircraft power plant:
inducing (2004) a vibration in the component; and acquiring (2006) a response (32) to the vibration induced in the component;
using a computer-implemented trained model, relating (2008) a characteristic of the response to a health condition of the component; and
when the health condition of the component is indicative of the component being suitable for service, installing (2010) the component in the aircraft power plant.

13. The method as defined in claim 12, comprising training the computer-implemented trained model using machine learning and historical data (44) relating a previous characteristic to a previous health condition; and, optionally,
wherein relating a characteristic in the response to the health condition of the component includes:
identifying an internal defect (23) present in the component based on the characteristic; and
relating the internal defect to the health condition.

14. A system (22) for estimating a remaining service life of a component (12) of an aircraft power plant (10), the system comprising:
an inducer (24) operable to cause an induced vibration in the component;
a sensor (30) operable to acquire a response (32) to the induced vibration in the component;
one or more data processors (38); and
non-transitory machine-readable memory (40) storing:
a trained model (34) trained using machine learning and historical data (44) associating previous responses to induced vibrations with previous remaining service lives for the component; and
instructions executable by the one or more data processors and configured to cause the one or more data processors to:
using the trained model, assign (1006) an estimated remaining service life to the component based on the acquired response; and
generate (1008) an output (36) indicative of the estimated remaining service life of the component.

15. The system as defined in claim 14, wherein the inducer is a hammer operable to strike the component; or
wherein the inducer is a transducer operable to induce a sound wave into the component.
